# EUROPÄISCHE PATENTSCHRIFT

(11) **EP 2 252 855 B1**
(45) Veröffentlichungstag und Bekanntmachung des Hinweises auf die Patenterteilung: **31.10.2012**
(21) Anmeldenummer: 09723563.4
(22) Anmeldetag: 18.03.2009
(51) Int. Cl.: G01N 3/40, G01N 33/15, G01B 11/24

(54) **VERFAHREN UND VORRICHTUNG ZUR BESTIMMUNG DER LAGE UND AUSRICHTUNG EINES PRÜFLINGS**
METHOD AND DEVICE FOR DETERMINING THE LOCATION AND ORIENTATION OF A TEST SUBJECT
PROCÉDÉ ET DISPOSITIF DE DÉTERMINATION DE LA POSITION ET DE L'ORIENTATION D'UN ÉCHANTILLON

(30) Priorität: 19.03.2008 DE 102008015083
(43) Veröffentlichungstag der Anmeldung: 24.11.2010
(73) Patentinhaber: Kollewe, Thomas, 22393 Hamburg (DE)
(72) Erfinder: Kollewe, Thomas, 22393 Hamburg (DE)
(74) Vertreter: Müller Verweyen
(86) Internationale Anmeldenummer: PCT/EP2009/002001
(87) Internationale Veröffentlichungsnummer: WO 2009/115311

(56) Entgegenhaltungen:
- EP-A- 0 400 408
- DE-A1- 4 431 059
- DE-A1-102005 025 355
- US-A- 5 897 611
- US-A1- 2004 003 776

## Beschreibung

Die Erfindung betrifft ein Verfahren und eine Vorrichtung zur Bestimmung der Bruchfestigkeit eines Arzneimittelprüflings.

Tablettenprüfgeräte werden in der pharmazeutischen Industrie und auch in der Forschung zur Kontrolle während des Produktionsprozesses, zur Qualitätssicherung und Produktcharakterisierung eingesetzt. Bei der Entwicklung und Produktion von festen Tabletten und anderen festen Arzneimittelformen sind die Bestimmung der Bruchfestigkeit, des Gewichts und der Abmessungen von großer Bedeutung. Die Bruchfestigkeit von Tabletten regelmäßig wird bereits während der Tablettenproduktion getestet.

Die Bruchfestigkeit einer Tablette kann insbesondere in der Weise bestimmt werden, dass die Tablette zwischen zwei Backen ("Pressbacken"), deren Ebenen parallel sind, mit zunehmender Kraft zusammengedrückt werden, bis sie brechen. Dabei wird beispielsweise die aufgewendete Kraft gegen den Weg oder gegen die Zeit gemessen.

Bei bekannten Apparaturen gibt es eine feste und eine bewegliche Pressbacke. Dabei wird die Tablette zunächst von der beweglichen Pressbacke an die feste Pressbacke herangeschoben. Tabletten, die beispielsweise eine gewölbte Oberfläche haben, verkippen jedoch oft beim Verschieben oder verändern ihre ursprüngliche Ausrichtung und gelangen dadurch dergestalt verkippt oder aufgerichtet oder falsch ausgerichtet zwischen den bewegliche und die feste Pressbacke, dass kein aussagekräftiger Härtetest durchgeführt werden kann. Insbesondere eine korrekte Ausrichtung entlang der Bruchkerbe einer Tablette zur Bestimmung der Bruchfestigkeit konnte bisher nicht optimal erzielt werden. Bei einem bekannten Lösungsversuch wird die Tablette in eine Kerbe gelegt, damit sie sich beim Verschieben nicht dreht. Diese Lösung kommt jedoch nur für bestimmte Tablettenformen in Betracht. Zudem hat sie bei der Bruchfestigkeitsmessung den Nachteil, dass die Tablette nicht vollständig von den Pressbacken erfasst wird, weil sich ein Teil der Tablette in der Rille befindet.

Ein besonderes Problem stellen die zahlreichen speziellen, also beispielsweise nicht rotationssymmetrischen, Tablettenformen dar, die praktisch nicht verschoben werden können, ohne dass sich ihre Ausrichtung verändern würde. Bei solchen speziellen Tablettenformen ist bisher stets eine manuelle Ausrichtung erforderlich. Eine Apparatur, die für mehrere verschiedene Tabletten mit unterschiedlichen Formen und Oberflächenbeschaffenheit automatisch die Bestimmung der Lage und Ausrichtung bzw. die Ausrichtung ermöglicht, ist bisher nicht bekannt.

US 6 260 419 B1 offenbart ein Verfahren und eine Vorrichtung zur Bestimmung der Bruchfestigkeit eines Arzneimittelprüflings.

US 2004 0003776 A1 betrifft eine Beschichtungsvorrichtung mit einem Lasergenerator zur Erzeugung eines horizontalen Laserfächers, mit dem die Breite des Objekts bestimmbar ist.

Die Vorrichtung gemäß DE 10 2005 025 355 A1 dient zur Messung von Tablettenhöhe und -durchmesser nach dem Schattenwurfprinzip, wobei eine Mehrzahl von auf einem Drehteller liegen. Mit der gezeigten Karussellanordnung kann jeder Prüfling im Wesentlichen nur unter einem Winkel betrachtet werden. Eine Bestimmung der Lage und Ausrichtung oder der genauen Abmessungen einer Tablette ist damit ebensowenig möglich wie die individuelle Änderung der Ausrichtung eines einzelnen Prüflings.

DE 44 31 059 A1 offenbart eine Vorrichtung zum Vermessen eines in eine Werkzeugaufnahme eingespannten Werkzeugs.

Der Erfindung liegt daher die Aufgabe zugrunde, ein Verfahren und eine Vorrichtung zur Verfügung zu stellen, die die Bestimmung der Lage und Ausrichtung von verschiedenen Prüflingen - wie unterschiedlich geformten Tabletten mit unterschiedlichen Oberflächeneigenschaften - ermöglichen, und die Ausrichtung des Prüfling im Hinblick auf die durchzuführende Bruchfestigkeitsprüfung ermöglichen. Diese Aufgabe wird durch das Verfahren und die Vorrichtung mit den in den Patentansprüchen 1 bzw. 9 bezeichneten Merkmalen gelöst. Weitere Ausführungsformen sind Gegenstand der Unteransprüche oder nachfolgend beschrieben.

Bei dem erfindungsgemäßen Verfahren wird der Prüfling (z. B. Tablette, Dragee, feste Form) über eine Zuführeinrichtung auf die Oberseite eines Drehtellers transportiert. Anschließend werden. insbesondere die in Anspruch 1 genannten Verfahrensschritte durchgeführt.

Vorzugsweise werden die Schattenwürfe bzw. die Profile des Prüflings (z.B. auf einem Schirm oder einer lichtdurchlässigen Streuscheibe zwischen Prüfling und Detektor) bei verschiedenen Winkelstellungen digital erfasst und aus ihnen die Abmessungen, Lage und/oder Ausrichtung des Prüflings auf dem Drehteller berechnet.

Bei einer vorteilhaften Ausführungsform des Verfahrens sind die Soll-Abmessungen des Prüflings bekannt. Durch das Verfahren kann dann überprüft werden, ob die Ist-Abmessungen mit dem Soll-Abmessungen übereinstimmen. Unabhängig davon können die bekannten Soll-Abmessungen bei der Berechnung der Lage und Ausrichtung des Prüflings verwendet werden.

Ein besonderer Vorteil erfindungsgemäßen Lösung besteht darin, dass dadurch, dass jeweils nur der Schatten bzw. das Profil des Prüflings vermessen wird, es auf die Oberflächen- und Reflexionseigenschaften nicht ankommt. Die Schwierigkeiten, die insofern bei reflektiven Messmethoden bestehen, können so umgangen werden. Die Vorrichtung kann mittels einer Software gesteuert werden, die vorzugsweise einen Lernmodus hat, die für verschiedene Tablettenformen den jeweiligen Schattenwurf bzw. das Profil erlernt.

Vorzugsweise ist der Schattenwurf bzw. das Profil des Prüflings unabhängig von seine Entfernung von dem Detektor. Dies wird vorzugsweise dadurch erreicht, dass der Prüfling mit parallelem Licht (kollimiertem Licht) bestrahlt wird oder es sich um diffuses Licht handelt, sich aber zwischen Prüfling und Detektor ein Linsensystem (telezentrisches Objektiv) befindet, das nur paralleles Licht zum Detektor durchlässt.

Bei einer vorteilhaften Ausführungsform handelt es sich bei dem Detektor um eine Zeilenkamera, also einen digitalen Kameratyp, der nur eine einzelne Sensorzeile besitzt. Die Chipfläche ist dadurch wesentlich kleiner, wodurch die Wahrscheinlichkeit von Verunreinigungen kleiner ist. Zudem gibt es Zeilenkameras mit sehr hoher Auflösung. So sind Auflösungen von 12288 Pixeln bei Zeilen raten von 68 kHz möglich. Vorteilhafterweise erzeugt die Strahlungsquelle dann ein Lichtband. Vorteilhafterweise bilden Zeilenkamera und Strahlungsquelle eine Gabellichtschranke, die z.B. durch eine Spindel auf und ab bewegt werden kann.

Eine vorteilhafte Ausführungsform umfasst folgende Verfahrensschritte:
- die Gabellichtschranke bewegt sich von oben auf den Prüfling zu.
- die Höhe, bei der das Lichtband erstmalig durch den Prüfling unterbrochen wird, wird als Höhe des Prüfling gespeichert
- die Gabellichtschranke wird auf die halbe Höhe des Prüflings bewegt
- der Drehteller wird um 180 Grad gedreht
- bei verschiedenen Winkelstellungen des Drehtellers wird der Schatten, den der Prüfling wirft, von der Zeilenkamera erfasst.
- aus den Messdaten werden die seitlichen Abmessungen und die Lage des Objekts auf dem Teller bestimmt,
- die Gabellichtschranke wird auf eine Höhe bewegt, die nur geringfügig unter der Höhe des Prüflings liegt
- der Drehteller wird um 180 Grad gedreht
- aus den Messdaten wird eine Einkerbung des Prüflings erkannt.

Ebenfalls vorteilhaft ist eine Ausführungsform, bei der die Strahlung und die Kamera (oder das Lichtband und die Zeilenkamera) nur einen Bereich erfassen, der nur über einer Hälfte des Drehtellers liegt. Dadurch braucht die Kamera nur halb so groß zu sein. Wenn von Strahlung und Kamera nur eine Hälfte des Drehtellers abgedeckt ist, ist allerdings eine Drehung des Drehtellers um 360 Grad erforderlich. Denn der jeweilige Schatten bzw. das jeweilige Profil bei einer bestimmten Winkelstellung muss dann aus jeweils zwei Halbbildern zusammengesetzt werden. Bei der Lösung mit Lichtband und Zeilenkamera sind dann vorteilhafterweise folgende Verfahrensschritte umfasst:
- der Prüfling wird auf den Drehteller gelegt
- die Gabellichtschranke bewegt sich von oben auf den Prüfling zu
- die Höhe, bei der das Lichtband erstmalig durch den Prüfting unterbrochen wird, wird als Höhe 1 des Prüfling gespeichert
- der Drehteller wird um 180 Grad gedreht
- die Gabellichtschranke bewegt sich von oben auf den Prüfling zu
- die Höhe, bei der das Lichtband erstmalig durch den Prüfling unterbrochen wird, wird als Höhe 2 des Prüfling gespeichert
- aus Höhe 1 und Höhe 2 wird der größerer Wert als Höhe gespeichert
- die Gabellichtschranke wird auf die halbe Höhe des Prüflings bewegt
- der Drehteller wird um 360 Grad gedreht
- bei verschiedenen Winkelstellungen des Drehtellers wird der Schatten, den der Prüfling wirft, von der Zeilenkamera erfasst
- aus den Messdaten werden die seitlichen Abmessungen auf dem Teller bestimmt,
- die Gabellichtschranke wird auf eine Höhe bewegt, die nur geringfügig unter der Höhe des Prüflings liegt
- der Drehteller wird um 360 Grad gedreht
- aus den Messdaten wird eine Einkerbung des Prüflings erkannt.

Zur Vorbereitung der eigentlichen Messung wie z.B. der Bruchfestigkeitsmesssung kann der Prüfling dann vorteilhafterweise dadurch ausgerichtet werden, dass nach Bestimmung der Lage und Ausrichtung des Prüflings der Prüfling durch Drehung des Drehtellers in eine vorbestimmte Ausrichtung gebracht wird. Für die Bruchfestigkeitsmessung können dann zwei Pressbacken an den Prüfling, dessen Lage und Ausrichtung ermittelt sind, herangeführt werden.

Die Erfindungsgemäße Vorrichtung sieht die genannten Bauteile vor, die zur Durchführung des beschriebenen erfindungsgemäßen Verfahrens erforderlich sind. Für die Bruchfestigkeitsmessung sind dies insbesondere zwei Pressbacken, die relativ zueinander beweglich sind und an den ausgerichteten Prüfling herangeführt werden. Die Vorrichtung kann vorzugsweise so eingestellt werden, dass sie immer bei einer bestimmen Form der Projektion stehen bleibt und dann die Bruchfestigkeitsmessung erfolgt.

Vorteilhafterweise sind beide Pressbacken im Verhältnis zum Prüfling beweglich. Vorteilhafterweise sind beide Pressbacken auf einer U-förmigen Konstruktion (wie z.B. einem Wagen in U-Form) angebracht. Es kann dann zunächst eine fest an der Unterseite des "U" arretierte Pressbacke an den Prüfling herangeführt werden, indem das gesamte "U" entsprechend bewegt wird. Anschließend kann die zweite Pressbacke, die im Verhältnis zur Unterseite des "U" beweglich ist, an den Prüfling herangeführt werden und anschließend gegen den Prüfling drücken. Als Alternative zu zwei beweglichen Pressbacken kann auch eine feste und eine bewegliche Pressbacke gewählt werden. Dann muss der Drehteller translatorisch so bewegt werden können, dass die Tablette an die feste Pressbacke herangeführt wird.

Die Prüflinge können bespielsweise maximale horizontale Durchmesser von 30 mm und eine maximalen Höhe von 20 mm haben. Der aktive Bereich des Messsystems müssste dann mindestens rechteckig 30 mm x 20 mm oder rund mit einem Durchmesser von 36.1 mm sein.

Ausführungsbeispiele der Erfindung sind in den Zeichnungen beschrieben und werden im Folgenden näher beschrieben.
- Figur 1: zeigt eine schematische Seitenansicht von Teilen einer erfindungsgemäßen Vorrichtung.
- Figur 2: zeigt eine schematische Seitenansicht von Teilen einer erfindungsgemäßen Vorrichtung.
- Figur 3: zeigt eine Ansicht von Teilen einer erfindungsgemäßen Vorrichtung.
- Figur 4: zeigt eine Ansicht von Teilen einer erfindungsgemäßen Vorrichtung.
- Figur 5: zeigt eine Ansicht von Teilen einer erfindungsgemäßen Vorrichtung.
- Figur 6: zeigt eine Ansicht von Teilen einer erfindungsgemäßen Vorrichtung.
- Figur 7: zeigt eine Ansicht von Teilen einer erfindungsgemäßen Vorrichtung.
- Figur 8: zeigt eine schematische Seitenansicht einer Ausführungsform.
- Figur 9: zeigt eine Draufsicht auf den Drehteller bei einer Ausführungsform.
- Figur 10: zeigt eine Draufsicht auf den Drehteller bei einer speziellen Ausführungsform.

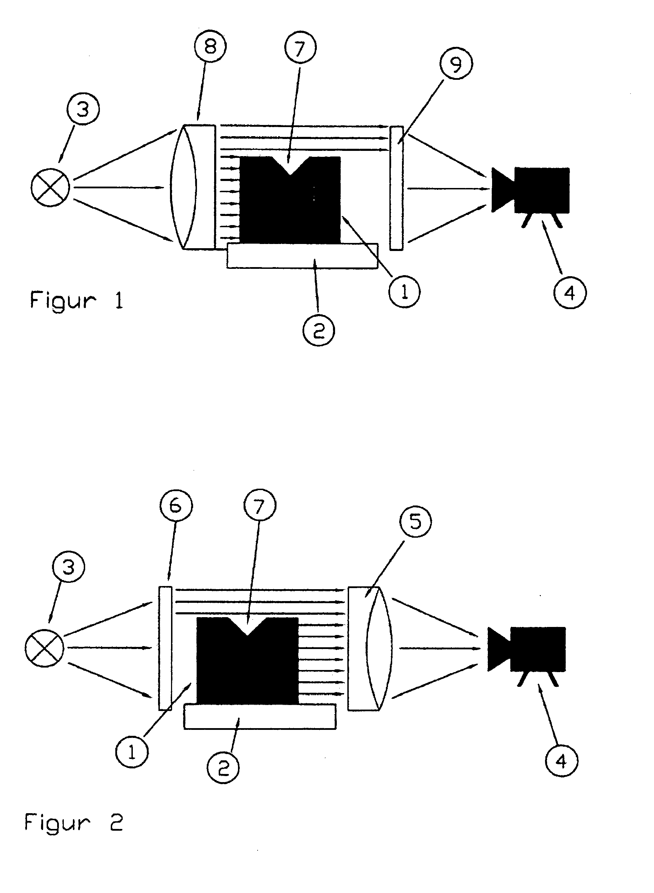

In Figur 1 wird ein Prüfling 1 gezeigt, der auf der Oberfläche eines Drehtellers 2 liegt. Der Prüfling 1 weist an seiner Oberseite eine Einkerbung 7 auf. Der Prüfling 1 wird mit Licht bestrahlt, das in einer Lampe 3 erzeugt wird. Das Licht wird durch eine Linse 8 in paralleles Licht (kollimiertes Licht) umgewandelt. Das Licht, das nicht von dem Prüfling 1 aufgehalten wird, fällt auf einen Schirm 9. Eine Kamera 4 nimmt den Schirm 9 auf. Durch digitale Bildverarbeitung wird dann der genaue Schattenwurf des Prüflings 1 bei einer bestimmten Winkelstellung des Drehtellers 2 berechnet. Während der Drehung des Drehtellers 2 werden weitere Aufnahmen gemacht, so dass nach einer Drehung des Drehtellers 2 von 180 Grad eine Vielzahl von Schattenwürfen des Prüflings 1 erfasst sind. Je nach Frequenz der Messungen (beispielsweise 50 Bilder pro Sekunde) und Drehgeschwindigkeit des Drehtellers 2 (beispielsweise 12 Umdrehungen pro Minute) kann dann mit entsprechender Genauigkeit die Lage und Ausrichtung des Prüflings 1 auf dem Drehteller 2 berechnet werden.

In Figur 2 sieht die Kamera 4 durch ein telezentrisches Objektiv 5 auf den Prüfling 1. Die Kamera 4 erfasst das Profil des Prüflings1. Der Abstand des Prüflings 1 von der Kamera 4 ist ohne Einfluss auf das gemessene Profil.

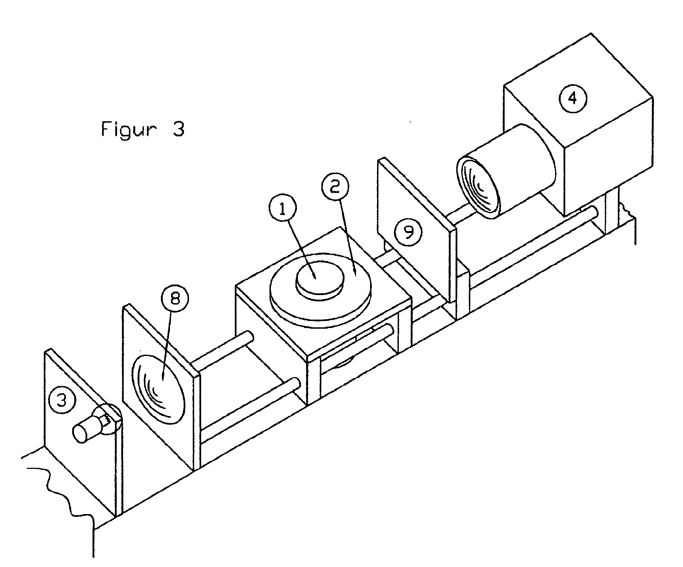

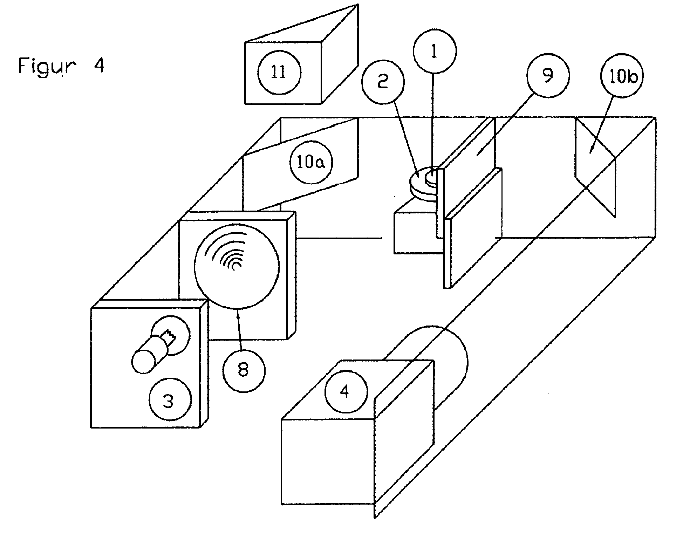

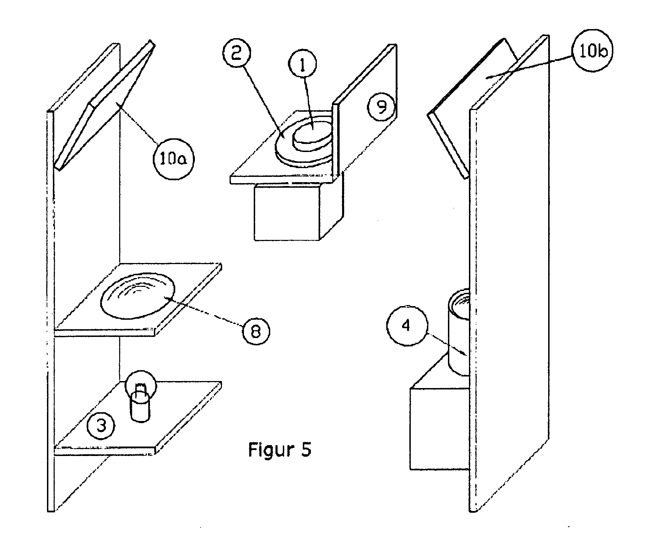

Figur 3 zeigt eine Apparatur gemäß der schematischen Zeichnung in Figur 1. Die Figuren 4 und 5 zeigen Aufbauten einer erfindungsgemäßen Vorrichtung, bei denen Lichtquelle 3, Prüfling 1 und Kamera 4 nicht auf einer Geraden liegen. Bei diesen Ausführungsbeispielen wird das Licht von der Lichtquelle 3 über einen Spiegel 10a oder alternativ über ein Prisma 11 auf den Prüfling 1 gelenkt. Das Licht, das nicht von dem Prüfling 1 abgefangen wird, fällt auf den Schirm 9. Das Licht, das den Schirm durchdringt, wird über den Spiegel 10b in den Kamera 4 gelenkt.

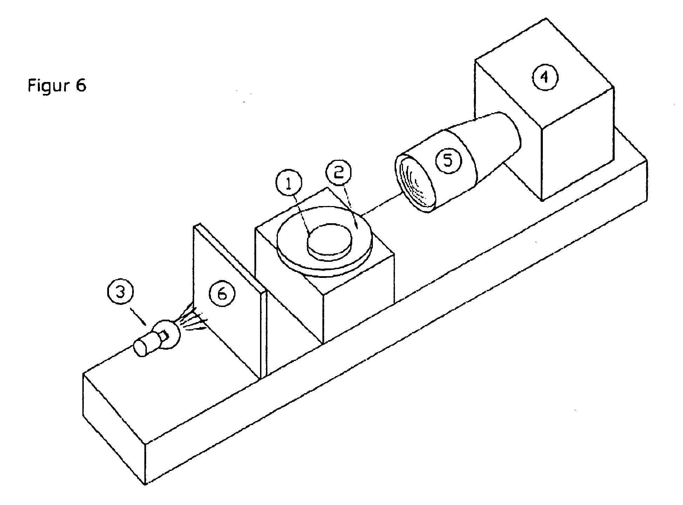

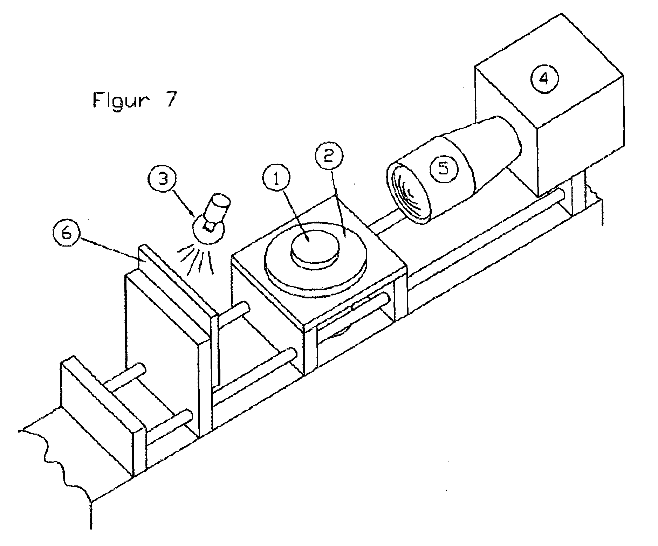

Die Figuren 6 und 7 zeigen Ausführungsbeispiele, bei denen das Licht aus der Lichtquelle zunächst auf einen Schirm 6 fällt. Von dem Schirm 6 fällt dann diffuses Licht auf den Prüfling 1. Aufgrund des telezentrischen Objektivs 5 wird jedoch nur paralleles Licht zur Kamera 4 durchgelassen. Die Kamera 4 erfasst das Profil des Prüflings 1. Der Abstand des Prüflings 1 von der Kamera 4 ist ohne Einfluss auf das gemessene Profil.

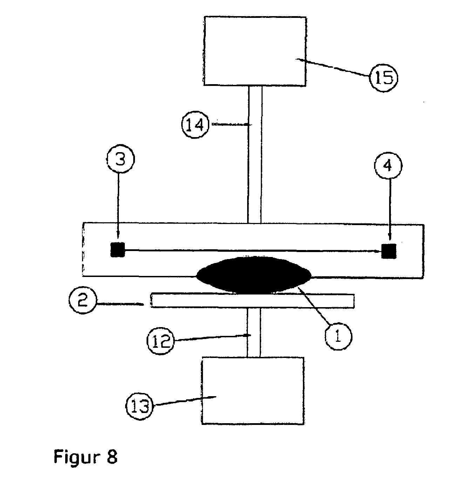

Figur 8 zeigt eine Seitenansicht eines Drehtellers 2. Die Lichtquelle 3 erzeugt ein Lichtband, das von einen Zeilenkamera 4 detektiert werden kann. Das System aus Lichtquelle 3 und Zeilenkamera 4 bildet eine Gabellichtschranke, die über eine Spindel 14 auf und ab bewegt werden kann. Das Messprinzip einer Gabellichtschranke besteht darin, dass Unterbrechungen des Lichtbandes durch ein Objekt mit Hilfe der Zeilenkamera detektiert werden kann.

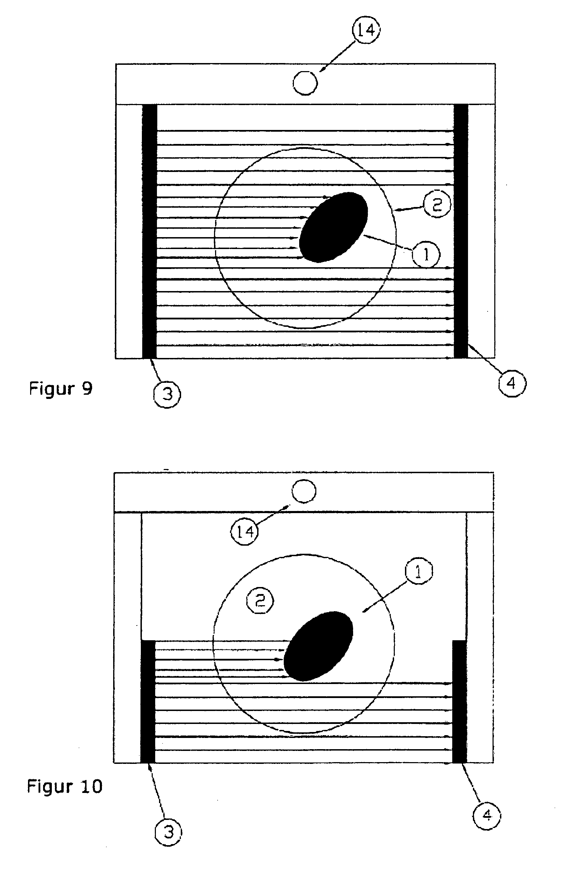

Figur 9 zeigt eine Draufsicht eines Systems gemäß Figur 6. Lichtband und Zeilenkamera 4 sind breiter als der Drehteller. Um die Lage und Ausrichtung des Prüflings zu bestimmen ist nur eine Drehung um 180 Grad erforderlich.

Figur 10 zeigt eine Ausführungsform, bei der das Lichtband und die Zeilenkamera nur einen Bereich erfassen, der nur über einer Hälfte des Drehtellers liegt. Dadurch braucht die Zeilenkamera nur halb so groß zu sein. Es ist dann eine Drehung um 360 Grad erforderlich um die Lage und Ausrichtung des Prüflings zu bestimmen.

## Patentansprüche

1. Verfahren zur Bestimmung der Bruchfestigkeit eines Arzneimittelprüflings (1) wie einer Tablette, einer festen Form oder eines Dragees, wobei der Prüfling (1) über eine Zuführeinrichtung oder manuell auf eine Auflageebene in einer Arzneimittel-Prüfvorrichtung transportiert worden ist, wobei es sich bei der Auflageebene um die Oberseite eines Drehtellers (2) handelt und der Arzneimittelprüfling (1) auf der Oberfläche des Drehtellers (2) liegt, und mindestens folgende Verfahrensschritte durchgeführt werden:
- der Prüfling (1) wird aus einer Richtung mit elektromagnetischer Strahlung wie beispielsweise sichtbarem Licht, die in einer Strahlungsquelle (3) erzeugt wird, angestrahlt;
- der Schatten, den der Prüfling (1) wirft, oder das Profil des Prüflings (1) wird von einem Detektor (4) wie einer Kamera erfasst;
- der Drehteller (2) wird um mindestens 180 Grad gedreht, um den Schatten, den der Prüfling (1) wirft, oder das Profil (1) des Prüflings von dem Detektor (4) bei verschiedenen Winkelstellungen des Drehtellers (2) zu erfassen, und aus den erfassten Schattenwürfen bzw. Profilen wird die Lage und Ausrichtung des Prüflings (1) auf dem Drehteller (2) berechnet;
- nach Bestimmung der Lage und der Ausrichtung des Prüflings (1) wird der Prüfling (1) durch Drehung des Drehtellers (2) in eine vorbestimmte Ausrichtung gebracht;
- anschließend werden zwei Pressbacken an den Prüfling herangeführt.

2. Verfahren nach Anspruch 1, **dadurch gekennzeichnet, dass** der Prüfling (1) geometrisch vermessen wird.

3. Verfahren nach Anspruch 1 oder 2, **dadurch gekennzeichnet, dass** die Höhe des Prüflings (1) ermittelt wird.

4. Verfahren nach einem der vorangehenden Ansprüche, **dadurch gekennzeichnet, dass** aus den Messdaten eine Einkerbung (7) des Prüflings erkannt wird.

5. Verfahren nach einem der vorangehenden Ansprüche, **dadurch gekennzeichnet, dass** der vom Detektor (4) erfasste Schatten beziehungsweise das vom Detektor (4) erfasste Profil des Prüflings (1) unabhängig von der Entfernung des Prüflings (1) von dem Detektor (4) ist.

6. Verfahren nach einem der vorhergehenden Ansprüche, **dadurch gekennzeichnet, dass** es sich bei der elektromagnetischen Strahlung um paralleles Licht handelt.

7. Verfahren nach einem der vorhergehenden Ansprüche, **dadurch gekennzeichnet, dass** es sich bei der elektromagnetischen Strahlung um diffuses Licht handelt und sich zwischen Prüfling (1) und Detektor (4) ein Linsensystem (5) befindet, das nur paralleles Licht zum Detektor (4) durchlässt.

8. Verfahren nach Anspruch 7, **dadurch gekennzeichnet, dass** der Detektor (4) und die Strahlungsquelle (3) als Gabellichtschranke vertikal auf und ab bewegt werden können.

9. Vorrichtung zur Bestimmung der Bruchfestigkeit eines Arzneimittelprüflings (1) wie einer Tablette, einer festen Form oder eines Dragees, der über eine Zuführeinrichtung oder manuell auf eine Auflageebene der Arzneimittel-Prüfvorrichtung transportiert worden ist, wobei es sich bei der Auflageebene um die Oberseite eines Drehtellers (2) handelt und der Arzneimittelprüfling (1) auf der Oberfläche des Drehtellers (2) liegt, wobei die Vorrichtung zur Durchführung mindestens folgender Verfahrensschritte eingerichtet ist:
- der Prüfling (1) wird aus einer Richtung mit elektromagnetischer Strahlung wie beispielsweise sichtbarem Licht, die in einer Strahlungsquelle (3) erzeugt wird, angestrahlt;
- der Schatten, den der Prüfling (1) wirft, oder das Profil des Prüflings (1) wird von einem Detektor (4) wie einer Kamera erfasst;
- der Drehteller (2) wird um mindestens 180 Grad gedreht, um den Schatten, den der Prüfling (1) wirft, oder das Profil (1) des Prüflings von dem Detektor (4) bei verschiedenen Winkelstellungen des Drehtellers (2) zu erfassen, und aus den erfassten Schattenwürfen bzw. Profilen wird die Lage und Ausrichtung des Prüflings (1) auf dem Drehteller (2) berechnet;
- nach Bestimmung der Lage und der Ausrichtung des Prüflings (1) wird der Prüfling (1) durch Drehung des Drehtellers (2) in eine vorbestimmte Ausrichtung gebracht;
- anschließend werden zwei Pressbacken an den Prüfling herangeführt.

10. Vorrichtung nach Anspruch 9, **dadurch gekennzeichnet, dass** die Vorrichtung zur geometrischen Vermessung des Prüflings (1) eingerichtet ist.

11. Vorrichtung nach Anspruch 9 oder 10, **dadurch gekennzeichnet, dass** die Vorrichtung zur Ermittlung der Höhe des Prüflings (1) eingerichtet ist.

12. Vorrichtung nach einem der Ansprüche 9 bis 11, **dadurch gekennzeichnet, dass** die Vorrichtung zur Ermittlung einer Einkerbung (7) des Prüflings aus den Messdaten eingerichtet ist.

13. Vorrichtung nach einem der Ansprüche 9 bis 12, **dadurch gekennzeichnet, dass** es sich bei dem Detektor (4) um eine Zeilenkamera handelt.

14. Vorrichtung nach einem der Ansprüche 9 bis 13, **dadurch gekennzeichnet, dass** die Strahlungsquelle (3) zur Erzeugung eines Lichtbands eingerichtet ist.

15. Vorrichtung nach einem der Ansprüche 9 bis 14, **dadurch gekennzeichnet, dass** der Detektor (4) und die Strahlungsquelle (3) als Gabellichtschranke vertikal auf und ab bewegt werden können.

## Claims

1. Method for determining the breaking strength of a pharmaceutical test object (1) like a tablet, a solid form or a coated tablet, wherein the test object (1), via a feeding device or manually, has been transported onto a support surface in a device for testing pharmaceuticals, wherein the support surface is the upper surface of a rotary plate (2) and the pharmaceutical test object (1) is lying on the upper surface of the rotary plate (2), and wherein at least the following process steps are carried out:
- the test object (1) is illuminated from a direction with electromagnetic radiation like for example visible light generated in a radiation source (3);
- the shadow cast by the test object (1) or the profile of the test object (1) is detected by a detector (4) like a camera;
- the rotary plate (2) is rotated about at least 180 degrees to detect the shadow cast by the test object (1) or the profile of the test object (1) with the detector (4) at different angular positions of the rotary plate (2), and the position and alignment of the test object (1) on the rotary plate (2) is calculated from the detected cast shadows or detected profiles;
- after determining the position and the alignment of the test object (1) the test object (1) is positioned in a predetermined alignment by rotating the rotary plate (2);
- subsequently two pressure-exerting jaws are moved towards the test object.

2. Method according to claim 1, **characterized in that** the geometry of the test object (1) is measured.

3. Method according to claim 1 or 2, **characterized in that** the height of the test object (1) is determined.

4. Method according to any one of the preceding claims, **characterized in that** based on the measured data a score (7) of the test object is identified.

5. Method according to any one of the preceding claims, **characterized in that** the shadow detected by the detector (4) or the profile of the test object (1) detected by the detector (4) is independent of the distance between the test object (1) and the detector (4).

6. Method according to any one of the preceding claims, **characterized in that** the electromagnetic radiation is parallel light.

7. Method according to any one of the preceding claims, **characterized in that** the electromagnetic radiation is diffuse light, and that there is a lens system (5) between the test object (1) and the detector (4), which only allows parallel light to pass through to the detector (4).

8. Method according to claim 7, **characterized in that** the detector (4) and the radiation source (3) can be moved vertically up and down as a fork light barrier.

9. Device for determining the breaking strength of a pharmaceutical test object (1) like a tablet, a solid form or a coated tablet, which, via a feeding device or manually, has been transported onto a support surface of the device for testing pharmaceuticals, wherein the support surface is the upper surface of a rotary plate (2) and the pharmaceutical test object (1) is lying on the upper surface of the rotary plate (2), wherein the device is adapted to carry out at least the following process steps:
- the test object (1) is illuminated from a direction with electromagnetic radiation like for example visible light generated in a radiation source (3);
- the shadow cast by the test object (1) or the profile of the test object (1) is detected by a detector (4) like a camera;
- the rotary plate (2) is rotated about at least 180 degrees to detect the shadow cast by the test object (1) or the profile of the test object (1) with the detector (4) at different angular positions of the rotary plate (2), and the position and alignment of the test object (1) on the rotary plate (2) is calculated from the detected cast shadows or detected profiles;
- after determining the position and the alignment of the test object (1) the test object (1) is positioned in a predetermined alignment by rotating the rotary plate (2);
- subsequently two pressure-exerting jaws are moved towards the test object.

10. Device according to claim 9, **characterized in that** the device is adapted to measure the geometry of the test object (1).

11. Device according to claim 9 or 10, **characterized in that** the device is adapted to determine the height of the test object (1).

12. Device according to one of the claims 9 to 11, **characterized in that** the device is adapted to determine a score (7) of the test object based on the measured data.

13. Device according to one of the claims 9 to 12, **characterized in that** the detector (4) is a line scan camera.

14. Device according to one of the claims 9 to 13, **characterized in that** the radiation source (3) is adapted to generate a light band.

15. Device according to one of the claims 9 to 14, **characterized in that** the detector (4) and the radiation source (3) can be moved vertically up and down as a fork light barrier.

## Revendications

1. Procédé de détermination de la résistance à la rupture d'un échantillon de médicament (1) comme un comprimé, une forme solide ou une dragée, l'échantillon (1) ayant été transporté par un dispositif d'amenée ou manuellement sur un plan de support dans un dispositif d'essai de médicament, s'agissant pour le plan de support de la partie supérieure d'un disque rotatif (2) et l'échantillon de médicament (1) se trouvant sur la surface supérieure du disque rotatif (2), et au moins les opérations suivantes étant exécutées :
- l'échantillon (1) est, à partir d'une certaine direction, exposé à un rayonnement électromagnétique, par exemple une lumière visible, qui est produit dans une source de rayonnement (3) ;
- l'ombre jetée par l'échantillon (1), ou le profil de l'échantillon (1) est détecté(e) par un détecteur (4) tel qu'une caméra ;
- le disque rotatif (2) subit une rotation d'au moins 180 degrés pour détecter l'ombre jetée par l'échantillon (1), ou pour détecter le profil de l'échantillon (1) par le détecteur (4) dans différentes positions angulaires du disque rotatif (2), et à partir des ombres jetées ou des profils détecté(e)s, la position et l'orientation de l'échantillon (1) sur le disque rotatif (2) est calculée ;
- après la détermination de la position et l'orientation de l'échantillon (1), l'échantillon (1) est amené par la rotation du disque rotatif (2) dans une orientation prédéfinie ;
- puis deux mâchoires de compression sont rapprochées de l'échantillon.

2. Procédé selon la revendication 1, **caractérisé par le fait que** l'échantillon (1) est mesuré de manière géométrique.

3. Procédé selon la revendication 1 ou 2, **caractérisé par le fait que** la hauteur de l'échantillon (1) est déterminée.

4. Procédé selon l'une des revendications précédentes, **caractérisé par le fait qu'**une encoche (7) de l'échantillon est reconnue à partir des données de mesure.

5. Procédé selon l'une des revendications précédentes, **caractérisé par le fait que** l'ombre détectée par le détecteur (4) ou le profil de l'échantillon (1) détecté par le détecteur (4) est indépendant de la distance de l'échantillon (1) par rapport au détecteur (4).

6. Procédé selon l'une des revendications précédentes, **caractérisé par le fait qu'**il s'agit, pour le rayonnement électromagnétique, d'une lumière parallèle.

7. Procédé selon l'une des revendications précédentes, **caractérisé par le fait qu'**il s'agit, pour le rayonnement électromagnétique, d'une lumière diffuse et qu'un système de lentille (5) est situé entre l'échantillon (1) et le détecteur (4), ce système ne laissant passer que la lumière parallèle vers le détecteur (4).

8. Procédé selon la revendication 7, **caractérisé par le fait que** le détecteur (4) et la source de rayonnement (3) peuvent être déplacés verticalement vers le haut et vers le bas comme une barrière photoélectrique en fourche.

9. Dispositif de détermination de la résistance à la rupture d'un échantillon de médicament
(1) comme un comprimé, une forme solide ou une dragée, qui a été transporté par un dispositif d'amenée ou manuellement sur un plan de support du dispositif d'essai de médicament, s'agissant pour le plan de support de la partie supérieure d'un disque rotatif
(2) et l'échantillon de médicament (1) se trouvant sur la surface supérieure du disque rotatif (2), le dispositif étant agencé pour exécuter au moins les opérations suivantes :
- l'échantillon (1) est, à partir d'une certaine direction, exposé à un rayonnement électromagnétique, par exemple une lumière visible, qui est produit dans une source de rayonnement (3) ;
- l'ombre jetée par l'échantillon (1), ou le profil de l'échantillon (1) est détecté(e) par un détecteur (4) tel qu'une caméra ;
- le disque rotatif (2) subit une rotation d'au moins 180 degrés pour détecter l'ombre jetée par l'échantillon (1), ou pour détecter le profil de l'échantillon (1) par le détecteur (4) dans différentes positions angulaires du disque rotatif (2), et à partir des ombres jetées ou des profils détecté(e)s, la position et l'orientation de l'échantillon (1) sur le disque rotatif (2) est calculée ;
- après la détermination de la position et l'orientation de l'échantillon (1), l'échantillon (1) est amené par la rotation du disque rotatif (2) dans une orientation prédéfinie ;
- puis deux mâchoires de compression sont rapprochées de l'échantillon.

10. Dispositif selon la revendication 9, **caractérisé par le fait que** le dispositif est agencé pour prendre la mesure géométrique de l'échantillon (1).

11. Dispositif selon la revendication 9 ou 10, **caractérisé par le fait que** le dispositif est agencé pour déterminer la hauteur de l'échantillon (1).

12. Dispositif selon l'une des revendications 9 à 11, **caractérisé par le fait que** le dispositif est agencé pour déterminer une encoche (7) de l'échantillon à partir des données de mesure.

13. Dispositif selon l'une des revendications 9 à 12, **caractérisé par le fait qu'**il s'agit pour le détecteur (4) d'une caméra à balayage linéaire.

14. Dispositif selon l'une des revendications 9 à 13, **caractérisé par le fait que** la source de rayonnement (3) est agencée pour produire une bande lumineuse.

15. Dispositif selon l'une des revendications 9 à 14, **caractérisé par le fait que** le détecteur (4) et la source de rayonnement (3) peuvent être déplacés verticalement vers le haut et vers le bas comme une barrière photoélectrique en fourche.
